# EUROPÄISCHE PATENTSCHRIFT

(11) **EP 1 881 398 B1**
(45) Veröffentlichungstag und Bekanntmachung des Hinweises auf die Patenterteilung: **18.02.2009**
(21) Anmeldenummer: 07405182.2
(22) Anmeldetag: 27.06.2007
(51) Int. Cl.: G06F 3/048

(54) **Verfahren zur Positionierung eines Cursors auf einem berührungsempfindlichen Bildschirm**
Method for positioning a cursor on a touch-sensitive screen
Procédé destiné au positionnement d'un curseur sur un écran tactile

(30) Priorität: 30.06.2006 CH 10502006
(43) Veröffentlichungstag der Anmeldung: 23.01.2008
(73) Patentinhaber: Iten, Christian, 8055 Zürich (CH)
(72) Erfinder: Iten, Christian, 8055 Zürich (CH); Lüthi, Daniel, 8004 Zürich (CH)
(74) Vertreter: Schneider Feldmann AG Patent- und Markenanwälte

(56) Entgegenhaltungen:
- EP-A- 0 878 754
- WO-A-20/05124526
- FR-A- 2 866 726

## Beschreibung

### Technisches Gebiet

Die vorliegende Erfindung beschreibt ein Verfahren zur pixelgenauen Positionierung eines Cursors ohne Hilfsmittel mit den Fingern einer Hand auf einem berührungsempfindlichen Bildschirm.

### Stand der Technik

Bei der Bedienung von touchscreens, berührungsempfindlichen Bildschirmen auf welche durch Berührungen Aktionen ausgelöst werden können, bedient der Benutzer einen Zeiger und/oder Schaltflächen, die auf einem, auf den besagten touchscreen produzierten Bild dargestellt werden.
Diese touchscreens sind heutzutage weit verbreitet und werden in handheld Computern, Ticket- und Bankautomaten eingesetzt.

Die momentan am weitesten verbreiteten berührungsempfindlichen Bildschirme erlauben das Auswählen und Anwählen grosser einfacher Schaltflächen durch das gezielte Berühren der entsprechenden Schaltfläche auf der Oberfläche des Bildschirms mit einer Fingerkuppe.

In den letzten Jahren wurden touchscreens entwickelt, welche die mehrfache gleichzeitige Berührung von Fingern oder Hilfsmitteln an unterschiedlichen Positionen eines solchen Bildschirms durch eine oder mehrere Benutzer erlauben, wobei die zugehörige Rechnereinheit auf die mehrfachen gleichzeitig auftretenden Signale reagiert. Derartige grossformatige touchscreens werden momentan in der Forschung benutzt und werden durch ihre Mehrbenutzerfähigkeit bald in Konferenzräumen und Schulungszimmern ihren Einsatz finden.

Wenn anspruchsvollere Anwendung als die blosse Auswahl und Betätigung von Schaltflächen durchgeführt werden sollen, dann muss ein Cursor existieren, der ein Anpeilen von Objekten, beispielsweise Grafikelementen, Textzeilen bis zu einzelnen Buchstaben erlaubt.

Bisher war die Definition der Auswahlposition durch die Grösse der Fingerkuppe und der damit verbundenen, für das Auge des Benutzers überdeckte, Fläche beschränkt. Die Fläche der Fingerkuppe macht üblicherweise eine Fläche mit einer Diagonalen von 30 bis 40 Bildpunkten (Pixeln) aus. Eine pixelgenaue Auswahl einer Absolutposition eines Zeigers ist bislang, ohne zur Hilfenahme von Hilfsmitteln nicht möglich und auch mit vielen Zeigevorrichtungen, wie Stiften kann die Position nicht pixelgenau variiert werden.

Ein bislang möglicher Ausweg ist die Vergrösserung des zu bearbeitenden Bereichs, was mit einer Änderung der Gesamtdarstellungsgrösse verbunden ist und dazu führt, dass nicht mehr der gesamte Arbeitsbereich dargestellt werden kann.

### Darstellung der Erfindung

Die vorliegende Erfindung hat sich zur Aufgabe gestellt ein Verfahren darzustellen, welches es erlaubt digitale Objekte ohne zur Hilfenahme von Hilfsmitteln mit den Fingern auf einem berührungsempfindlichen Bildschirm pixelgenau anzuwählen, zu bewegen und zu manipulieren.

Ohne Änderung der Bildschirmdarstellung, somit bei gleich bleibendem Bildausschnitt, wird diese Aufgabe von dem hier vorgestellten Verfahren, welches die beanspruchten Merkmale umfasst, gelöst.

### Kurze Beschreibung der Zeichnungen

Die Erfindung wird nachstehend im Zusammenhang mit den Zeichnungen beschrieben.

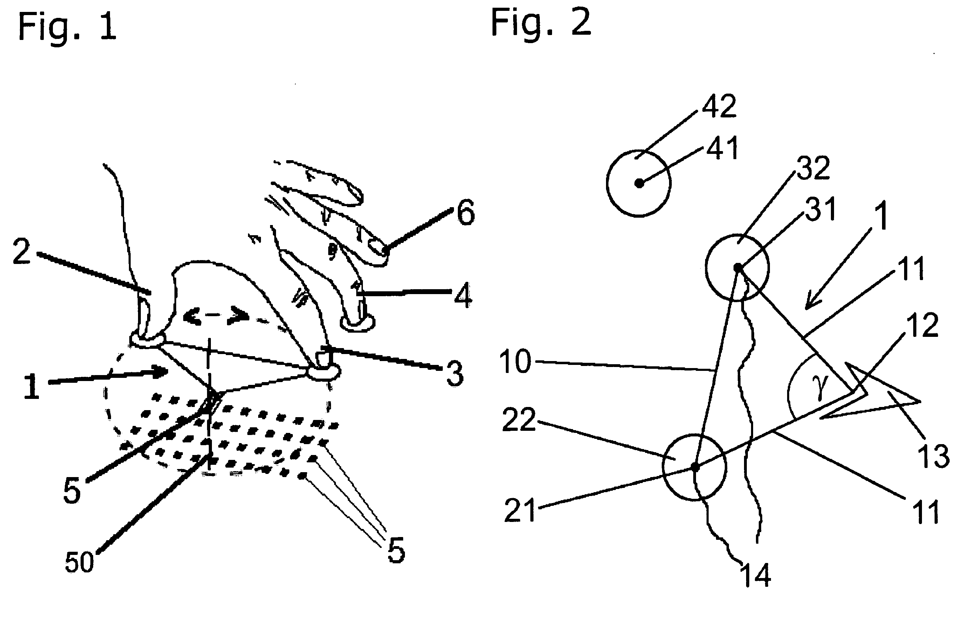

Figur 1 zeigt eine schematische perspektivische Ansicht einer Hand auf einer Bildschirmoberfläche, wobei ein digitales Objekt mit einem Cursor ausgewählt wurde
Figur 2 zeigt eine 2d Zeichnung der geometrischen Bestimmung eines Dreiecks aus Berührungspunkten.

### Beschreibung

Es sind berührungsempfindliche Bildschirme erhältlich, welche in der Lage sind Signale von einer Vielzahl von Objekten, beispielsweise von Fingern, welche sich auf der Oberfläche des Bildschirms befinden, zu detektieren und gleichzeitig zu verarbeiten. Dadurch können die augenblicklichen Positionen der einzelnen Finger bestimmt und dargestellt werden. Solche multi-user-touch oder multi-touchscreens sind bereits erhältlich und finden vermehrte Einsatzgebiete.

Das erfindungsgemässe Verfahren geht von einem beschriebenen multi-touchscreen aus, auf dessen Oberfläche ein erster Finger 2, ein zweiter Finger 3 und ein dritter Finger 4 einer Hand zeitgleich oder im zeitlichen Abstand gesenkt werden, woran anschliessend eine zugehörige Rechnereinheit die Berührungspunkte 21, 31, 41 in einer für berührungsempfindliche Bildschirme üblichen Weise der jeweiligen Finger 2, 3, 4 berechnet.
Berührungsflächen 22, 32, 42, welche die Fingerkuppen der Finger 2, 3, 4 bilden, werden dazu ausgewertet und die Mittelpunkte dieser Berührungsflächen 22, 32, 42 bestimmt. Die bestimmten Mittelpunkte der einzelnen Berührungsflächen 22, 32, 42 werden dann den entsprechenden Berührungspunkten 21, 31, 41 zugeordnet, womit die Recheneinheit in der Folge rechnet.

In einer vorteilhaften Ausführungsform werden die Berührungsflächen 22, 32, 42 an den Stellen der Berührungspunkte 21, 31, 41 grafisch dargestellt, an denen die Fingerkuppen auf der Oberfläche des Bildschirmes aufliegen, so dass sie gegebenenfalls die Grösse der Fingerkuppen überragen und auf dem Bildschirm bei aufgelegten Fingern 2, 3, 4 sichtbar sind. Da auch eine Interaktion mit einem Berührungspunkt 21, 31, 41 in Form eines Anklickens möglich sein soll, ist es zwingend erforderlich, dass der Benutzer die zu berührende Berührungsfläche 22, 32, 42 sehen kann.

Vorteilhafterweise ist der erste Finger 2 der Daumen und der zweite Finger 3 der Zeigefinger einer Hand.

Nach der Bestimmung der Berührungspunkte 21, 31, 41 werden die Abstände zwischen den einzelnen benachbarten Berührungspunkten 21, 31, 41 bestimmt. Es resultieren drei Strecken zwischen den Berührungspunkten 21, 31, 41. Zwischen den beiden Berührungspunkten 21, 31 mit dem zweitgrössten Abstand wird eine Basis 10 eines gleichschenkligen Dreiecks 1 gelegt, so dass die Endpunkte der Basis 10 auf den beiden Berührungspunkten 21, 31 liegen. Die Schenkel 11 des gleichschenkligen Dreiecks 1 laufen in einer Spitze 12 des Dreiecks 1 zusammen, wobei sie einen Winkel γ in der Spitze 12 einschliessen. Die Schenkel 11 laufen von der Basis 10 aus betrachtet entgegen der Richtung des Berührungspunktes 41, der nicht auf einen Endpunkt der Basis 10 fällt, was im Folgenden basisfern genannt wird. Die Schenkel 11 weisen damit von dem basisfernen Berührungspunkt 41 weg.

Durch die beschriebene Distanzmessung, die Verlegung der Basis 10 zwischen die Berührungspunkte 21, 31 mit dem zweitgrössten Abstand allein, könnte bereits ein gleichschenkliges Dreieck 1 mit beliebiger Ausrichtung definiert werden. Im vorliegenden Erfindungsgedanken soll aber bestimmt werden, von welcher Hand die Finger 2, 3, 4 stammen, die aufgelegt wurden. Die Bestimmung, ob die Finger 2, 3, 4 von der linken oder der rechten Hand stammen, ist nur durch Hinzunahme des dritten Fingers und Auswertung der Relativlage der Berührungspunkte 21, 31, 41 zueinander, möglich. Je nach Wahl der Hand weist die Spitze 12 in die jeweils andere Richtung, da die Ausrichtung immer basisfern ist. Die Bestimmung der Hand, mit welcher das Dreieck 1 und damit der Cursor erzeugt werden ist wichtig, da die Rechnereinheit die Spitze 12 des Dreiecks 1 immer von der Handfläche weg erzeugen soll, damit eine Überdeckung des Cursors durch eine Fingerkuppe oder einer Handfläche vermieden wird.

Da der erste Finger 2 vorteilhafterweise der Daumen ist und der zweite Finger 3 der Zeigefinger, wird die oben beschriebene Basis 10 zwischen Daumen und Zeigefinger gelegt und je nach identifizierter Hand der Cursor rechts bzw. links von der Basis 10.

Analog zu den Berührungsflächen 22, 32, 42 können die Basis 10 und die Schenkel 11 des Dreiecks 1 grafisch dargestellt werden, oder unsichtbar sein. Die Spitze 12 des Dreiecks 1 stellt in jedem Fall den Cursor dar, der vom Benutzer bewegt wird. Zur Verdeutlichung des Cursors kann der Spitze 12 des Dreiecks 1 vorgelagert, ausserhalb der Fläche des Dreiecks 1, ein Cursorsymbol 13 dargestellt werden. Durch das Cursorsymbol 13 wird eine reproduzierbare Positionierung des Cursors vereinfacht. Dieses Cursorsymbol 13 ist in einer vorteilhaften Ausführungsform ein Pfeil, es sind aber auch andere spitz auf einen Punkt zulaufende Gebilde, oder beispielsweise ein Fadenkreuz als Cursorsymbol 13 denkbar. Damit der Cursor nicht zu weit von der Basis 10 entfernt ist, wodurch eine geringe Bewegung der Hand zu einer grossen Auslenkung und Bewegung des Cursors führt, ist es vorteilhaft den Winkel γ als stumpfen Winkel zu wählen.

Sobald die Ausrichtung des Dreiecks 1 durch die Lage des ersten, des zweiten und des dritten Fingers 2, 3, 4 relativ zueinander bestimmt wurde, kann der dritte Finger 4 wieder von der Bildschirmoberfläche entfernt werden. Dieser dritte Finger 4 und auch ein vierter Finger 6 und ein fünfter Finger können gegebenenfalls später Aktionen auslösen. So ist es vorteilhaft durch ein späteres erneutes Senken des dritten Fingers 4 Aktionen wie die Auswahl eines Punktes eines Grafikobjekts, oder das Öffnen einer Datei auszulösen. Solche Funktionen kennt man beispielsweise von der linken Maustaste eines Personalcomputers mit einem Standardbetriebsystem.

Durch das Absenken des vierten Fingers 6 kann beispielsweise ein Kontextmenü auf der Bildschirmoberfläche erzeugt werden, wie es auch von Standardbetriebssystemen auf Personalcomputern bekannt ist. Um dem Benutzer einen Anhaltspunkt zu geben an welche Position der dritte und der vierte Finger 4, 6 gesenkt werden sollte, um Aktionen auszulösen, können Soll-Berührungsflächen dargestellt werden, wenn die jeweiligen Finger keinen Kontakt zur Bildschirmoberfläche haben. Berührt der jeweilige Finger 4, 6 die vorgegebene Soll-Berührungsfläche ist das ähnlich einem Mausklick und löst eine vorgegebene Aktion aus.

Möchte der Benutzer einen bestimmten Pixel, ein Grafikobjekt oder beispielsweise eine Textzeile markieren, so legt er zuerst mindestens einen ersten, einen zweiten und einen dritten Finger 2, 3, 4 auf die Bildschirmoberfläche auf. Daraufhin wird das Dreieck 1, je nach benutzter linker oder rechter Hand, erzeugt. Es kann das gesamte Dreieck 1 oder auch ein Cursorsymbol 13 angezeigt werden, wodurch der Benutzer in der Lage ist, Objekte anzuwählen. Der Benutzer kann daraufhin bis auf den ersten und zweiten Finger 2, 3 alle weiteren Finger von der Oberfläche abheben und den Cursor beziehungsweise das freiliegende und gut sichtbare Cursorsymbol 13 pixelgenau über die Oberfläche steuern.

Ist der Cursor oder das Cursorsymbol 13 auf dem gewünschten Punkt, kann eine Aktion durch Berührung eines weiteren Fingers 4, 6 ausgelöst werden. Soll beispielsweise ein Punkt eines Grafikobjekts ausgewählt werden, kann der dritte Finger 4 auf die entsprechende Soll-Berührungsfläche gelegt werden. Wird daraufhin die gesamte Hand bewegt, bewegt der Benutzer den ausgewählten Punkt bzw. das gesamte Objekt auf dem Bildschirm. Diese Bewegung kann ein lineares Verschieben oder auch eine freie Rotation mit einer Rotationsachse 50 sein, welche durch das gewählte Objekt verläuft. Die Funktionen, die bei Betätigung des dritten und vierten Fingers 4, 6 und eventuell eines fünften Fingers ausgeführt werden, sind je nach Realisierung variierbar und erweiterbar.

Wird das beschriebene Verfahren in einem Konferenzraum auf einem berührungslosen Bildschirm angewendet, um welchen mehrere Teilnehmer sitzen, dann können mehrere Benutzer gleichzeitig Objekte wie Textdateien anwählen, skalieren, rotieren, Passagen markieren und in Richtung eines anderen Teilnehmers bewegen. Durch das hier vorgestellte Verfahren können auch sehr kleine, bis zu einem Pixel grosse Objekte genau angewählt und manipuliert werden. Ein weiteres grosses Einsatzgebiet ist die Grafikbearbeitung, die eine pixelgenaue Auswahl von Objekten unbedingt benötigt.

### Bezugszeichenliste

| | | |
|---|---|---|
| 1 | Dreieck (gleichschenklig) | |
| | 10 | Basis |
| | 11 | Schenkel |
| | 12 | Spitze |
| | 13 | Cursorsymbol |
| | 14 | Eckpunkt |
| | | |
| | γ | Winkel zwischen Schenkeln |
| | | |
| 2 | Erster Finger | |
| | 21 | Berührungspunkt |
| | 22 | Berührungsfläche |
| | | |
| 3 | Zweiter Finger | |
| | 31 | Berührungspunkt |
| | 32 | Berührungsfläche |
| | | |
| 4 | Dritter Finger | |
| | 41 | Berührungspunkt |
| | 42 | Berührungsfläche |
| | | |
| 5 | Digitales Objekt | |
| | 50 | Rotationsachse |
| | | |
| 6 | Vierter Finger | |

## Patentansprüche

1. Verfahren zur pixelgenauen Positionierung eines Cursors ohne Hilfsmittel mit den Fingern einer Hand auf einem berührungsempfindlichen Bildschirm, **gekennzeichnet durch** folgende Schritte:
a) Bestimmung der Berührungspunkte (21, 31, 41) eines ersten Fingers (2), eines zweiten Fingers (3) und eines dritten Fingers (4) einer Hand, die auf die Oberfläche des Bildschirms gelegt werden, wobei die Mittelpunkte der Berührungsflächen (22, 32, 42) der Finger (2, 3, 4) auf dem Bildschirm zur Definition der Berührungspunkte (21, 31, 41) ermittelt werden,
b) Aufspannen eines gleichschenkligen Dreiecks (1) mit einer Basis (10) zwischen den Mittelpunkten der zwei am zweitweitesten voneinander entfernten benachbarten Berührungspunkte (21, 31, 41),
wobei die Schenkel (11)
von dem basisfernen Berührungspunkt wegweisend angeordnet sind, und ihr Schnittpunkt in der Spitze (12) des Dreiecks (1) die Position eines Cursors definiert, welcher pixelgenau auf der Oberfläche des Bildschirms über einem digitalen Objekt (5) positionierbar ist.

2. Verfahren nach Anspruch 1, **dadurch gekennzeichnet, dass** ein Cursorsymbol (13), ausserhalb des Dreiecks (1), der Spitze (12) vorgelagert wird und zur Verdeutlichung des Cursors dient.

3. Verfahren nach Anspruch 1, **dadurch gekennzeichnet, dass** der Finger (2, 3, 4), dessen Berührungspunkt (21, 31, 41) keinen Eckpunkt (14) des Dreiecks (1) einschliesst, nach Erzeugung des Dreiecks (1) wieder von der Oberfläche des berührungsempfindlichen Bildschirms gelöst wird.

4. Verfahren nach Anspruch 3, **dadurch gekennzeichnet, dass** der Cursor durch Bewegung der Finger (2, 3, 4), deren Berührungspunkte die Eckpunkte (14) des Dreiecks (1) einschliessen, über einem digitalen Objekt (5) positioniert wird.

5. Verfahren nach Anspruch 4, **dadurch gekennzeichnet, dass** ein digitales Objekt (5) durch erneute Berührung der Oberfläche des Bildschirms mit dem dritten Finger (4) und/oder einem vierten Finger (6) manipuliert wird.

6. Verfahren nach Anspruch 5, **dadurch gekennzeichnet, dass** durch die Manipulation des digitalen Objektes (5) eine Relativverschiebung des digitalen Objektes (5) auf dem berührungsempfindlichen Bildschirm erfolgt.

7. Verfahren nach Anspruch 5, **dadurch gekennzeichnet, dass** durch die Manipulation des digitalen Objektes (5) ein Öffnen einer Datei erfolgt.

8. Verfahren nach Anspruch 5, **dadurch gekennzeichnet, dass** durch die Manipulation des digitalen Objektes (5) eine Rotation des digitalen Objektes (5) erfolgt, wobei dessen Rotationsachse (50) im Mittelpunkt des digitalen Objektes (5) liegt.

9. Verfahren nach Anspruch 5, **dadurch gekennzeichnet, dass** durch die Manipulation des digitalen Objektes (5) das Öffnen und Anzeigen eines Kontextmenüs erfolgt.

10. Verfahren nach Anspruch 1, **dadurch gekennzeichnet, dass** als Winkel γ zwischen den beiden Schenkeln (11) des gleichschenkligen Dreiecks (1) ein stumpfer Winkel (γ > 90°) gewählt wird.

11. Verfahren nach Anspruch 1, **dadurch gekennzeichnet, dass** die Berührungsflächen (22, 32, 42) an Stelle der Berührungspunkte (21, 31, 41) der Finger (2, 3, 4) auf dem Bildschirm, zur Erleichterung der Bedienung grafisch dargestellt werden.

## Claims

1. A method for the positioning of a cursor without aids to an accuracy of one pixel with the fingers of one hand on a touch-sensitive screen,
**characterised by** the following steps:
a) determination of the contact points (21, 31, 41) of a first finger (2), a second finger (3) and a third finger (4) of one hand, which are placed onto the surface of the screen, wherein
the centre points of the contact areas (22, 32, 42) of the fingers (2, 3, 4) are determined on the screen for purposes of defining the contact points (21, 31, 41),
b) generation of an isosceles triangle (1) with a base (10) between the centre points of the two neighbouring contact points (21, 31, 41) that are the second furthest distance from one another, wherein
the sides (11) are arranged pointing away from the contact point remote from the base, and their point of intersection at the tip (12) of the triangle (1) defines the position of a cursor, which can be positioned over a digital object (5) to an accuracy of one pixel on the surface of the screen.

2. The method according to Claim 1,
**characterised in that** a cursor symbol (13), outside the triangle (1), is positioned ahead of the tip (12) and serves to clarify the cursor.

3. The method according to Claim 1,
**characterised in that** the ringer (2, 3, 4), whose contact point (21, 31, 41) does not comprise a corner point (14) of the triangle (1), after generation of the triangle (1) is then released from the surface of the touch-sensitive screen.

4. The method according to Claim 3,
**characterised in that** the cursor is positioned over a digital object (5) by movement of the fingers (2, 3, 4), whose contact points (21, 31, 41) comprise the corner points (14) of the triangle (1).

5. The method according to Claim 4,
**characterised in that** a digital object (5) is manipulated by renewed contact of the surface of the screen with the third finger (4) and/or a fourth finger (6).

6. The method according to Claim 5,
**characterised in that** by manipulation of the digital object (5) a relative displacement of the digital object (5) takes place on the touch-sensitive screen.

7. The method according to Claim 5,
**characterised in that** by the manipulation of the digital object (5) an opening of a file takes place.

8. The method according to Claim 5,
**characterised in that** by the manipulation of the digital object (5) a rotation of the digital object (5) takes place, wherein
its axis of rotation (50) lies at the centre point of the digital object (5).

9. The method according to Claim 5,
**characterised in that** by the manipulation of the digital object (5) the opening and display of a context menu takes place.

10. The method according to Claim 1,
**characterised in that** between the two sides (11) of the isosceles triangle (1) an obtuse angle (γ > 90°) is selected as the angle γ.

11. The method according to Claim 1,
**characterised in that** the contact areas (22, 32, 42) are graphically represented in lieu of the contact points (21, 31, 41) of the fingers (2, 3, 4) on the screen for ease of operation.

## Revendications

1. Procédé pour le positionnement au pixel près d'un curseur sans expédient avec les doigts d'une main sur un écran tactile, **caractérisé par** les étapes suivantes :
a) détermination des points de contact (21, 31, 41) d'un premier doigt (2), d'un second doigt (3) et d'un troisième doigt (4) d'une main, qui sont posés sur la surface de l'écran, les centres des surfaces de contact (22, 32, 42) des doigts (2, 3, 4) sur l'écran étant déterminées pour la définition des points de contact (21, 31, 41),
b) positionnement d'un triangle (1) isocèle avec une base (10) entre les centres des deux points de contact (21, 31, 41) voisins les plus éloignés en seconde position les uns des autres,
les côtés latéraux (11) étant disposés à partir du point de contact éloigné de la base, et leur point d'intersection définissant au sommet (12) du triangle (1) la position d'un curseur qui peut être positionnée au pixel près sur la surface de l'écran au-dessus d'un objet (5) numérique.

2. Procédé selon la revendication 1, **caractérisé en ce qu'**un symbole de curseur (13) est placé en amont du sommet (12) à l'extérieur du triangle (1) et sert à l'illustration du curseur.

3. Procédé selon la revendication 1, **caractérisé en ce que** le doigt (2, 3, 4), dont le point de contact (21, 31, 41) n'incluent pas de sommet (14) du triangle (1), est détaché après la génération du triangle (1) à nouveau de la surface de l'écran tactile.

4. Procédé selon la revendication 3, **caractérisé en ce que** le curseur est positionne au-dessus d'un objet (5) numérique par le déplacement des doigts (2, 3, 4), dont les points de contact incluent les sommets (14) du triangle (1).

5. Procédé selon la revendication 4, **caractérisé en ce qu'**un objet (5) numérique est manipulé par un nouveau contact de la surface de l'écran avec le troisième doigt (4) et/ou un quatrième doigt (6).

6. Procédé selon la revendication 5, **caractérisé en ce qu'**un déplacement relatif de l'objet (5) numérique sur l'écran tactile s'effectue par la manipulation de l'objet (5) numérique.

7. Procédé selon la revendication 5, **caractérisé en ce qu'**une ouverture d'un fichier s'effectue par la manipulation de l'objet (5) numérique.

8. Procédé selon la revendication 5, **caractérisé en ce qu'**une rotation de l'objet (5) numérique, dont l'axe de rotation (50) se situe au centre de l'objet (5) numérique, s'effectue par la manipulation de l'objet (5) numérique.

9. Procédé selon la revendication 5, **caractérisé en ce que** l'ouverture et l'affichage d'un menu de contexte s'effectuent par la manipulation de l'objet (5) numérique.

10. Procédé selon la revendication 1, **caractérisé en ce qu'**un angle obtus (γ > 90°) est choisi comme angle γ entre les deux côtés latéraux (11) du triangle (1) isocèle.

11. Procédé selon la revendication 1, **caractérisé en ce que** les surfaces de contact (22, 32, 42) sont représentées graphiquement sur l'écran à l'emplacement des points de contact (21, 31, 41) des doigts (2, 3, 4), afin de faciliter la commande.
